# EUROPEAN PATENT APPLICATION

(11) **EP 4 609 776 A1**
(43) Date of publication of application: **03.09.2025**
(21) Application number: 23912728.5
(22) Date of filing: 19.12.2023
(51) Int. Cl.: A47L 15/42, A47L 15/48, F25B 39/04, F28D 21/00, F25B 1/00

(54) **DISHWASHER**

(30) Priority: 26.12.2022 KR 20220184097
(71) Applicant: LG Electronics Inc., Yeongdeungpo-gu Seoul 07336 (KR)
(72) Inventor: KIM, Jeong In, Seoul 08592 (KR); PARK, Hyung Man, Seoul 08592 (KR); KIM, Jeongkon, Seoul 08592 (KR); JEONG, Min Jae, Seoul 08592 (KR); KIM, Jungwon, Seoul 08592 (KR)
(74) Representative: Vossius & Partner Patentanwälte Rechtsanwälte mbB
(86) International application number: PCT/KR2023/020951
(87) International publication number: WO 2024/144053

(57) **Abstract**

The present invention relates to a dishwasher wherein a condenser is configured to have a double tube wound in a coil shape such that heat exchange occurs between a refrigerant and washing water, thereby improving the heat exchange performance and heat exchange efficiency of the condenser, the double tube wound in a coil shape is contained in a duct-type case, and the case functions as a heat insulator, thereby improving the heating efficiency of washing water during a washing mode.

## Description

### [Technical Field]

The present disclosure relates to a dishwasher, and more specifically, to a dishwasher in which a condenser includes a double tube in which heat exchange between a refrigerant and washing water is performed and the double tube is wound into a coil form, thereby improving heat exchange performance and heat exchange efficiency of the condenser, and the double tube wound into the coil form is received in a duct-shaped case and the casing functions as a thermal insulation material, thereby improving heating efficiency of washing water in a washing mode.

### [Background Art]

A dishwasher is an apparatus that washes dishes and cooking utensils as washing targets stored therein by spraying washing water thereto. In this regard, the washing water may contain washing detergent.

A dishwasher generally includes a tub having a washing space defined therein, a dish rack that accommodates therein a washing target inside the tub, a spraying arm that sprays the washing water into the dish rack, and a sump that stores therein water and supplies the washing water to the spraying arm.

Using this dishwasher may allow a time and effort required to wash the dishes and other washing targets after a meal to be reduced, thereby contributing to user convenience.

In the washing process using the dishwasher, the washing water and air may be heated and used to increase the washing effect. An electric heater may be used as a device for heating the washing water and air. In one example, the washing water may be heated using a heat pump apparatus instead of the electric heater.

The heat pump apparatus has higher energy efficiency than the electric heater. Thus, when the washing water is heated by the heat pump apparatus, the consumption of electricity may be reduced.

In this regard, European Patent No. 2682039 (Prior Document 001) discloses a configuration of a dishwasher including a heat pump apparatus capable of heating washing water by exchanging heat between refrigerant and the washing water using a double tube type condenser.

However, the condenser of the dishwasher disclosed in Prior Document 001 is provided in a state in which the double tube extends in a straight line. Therefore, when a length of the double tube is not secured as much as possible, the heat exchange area becomes insufficient and it may be difficult to sufficiently raise the temperature of the washing water.

In addition, the dishwasher disclosed in prior document 001 is configured such that the washing water heated using the double tube is supplied only to some nozzles, the washing performance is highly likely to deteriorate.

In addition, the condenser of the dishwasher disclosed in the prior document 001 is used only for heating the washing water during the washing mode. Thus, a separate condenser or heat exchanger for heating air during a drying mode should be provided. Therefore, a valve structure for switching a flow path of the refrigerant and an additional refrigerant tube should be provided, and thus, a structure of the refrigerant flow path is considerably complicated and a manufacturing cost of the dishwasher is increased.

### [Disclosure]

### [Technical Problem]

The present disclosure has been devised to solve the above-described problems of the prior art. Thus, a first purpose of the present disclosure is to provide a dishwasher in which a condenser includes a double tube in which heat exchange between a refrigerant and washing water is performed and the double tube is wound into a coil form, thereby improving heat exchange performance and heat exchange efficiency of the condenser,

In addition, a second purpose of the present disclosure is to provide a dishwasher in which the double tube wound into the coil shape is accommodated in a duct-shaped casing and the casing is configured to function as a thermal insulation material, thereby improving heating efficiency of washing water while a washing mode is performed.

In addition, a third purpose of the present disclosure is to provide a dishwasher in which while a drying mode is performed in a state in which the double tube wound into the coil shape is accommodated in the duct-shaped casing, the double tube heats the air, so that switching of a flow path is unnecessary when an operation mode switches from the washing mode to the drying mode, and additional structures such as a switching valve may be excluded, thereby simplifying a structure of the dishwasher and reducing a manufacturing cost thereof.

Purposes of the present disclosure are not limited to the above-mentioned purpose. Other purposes and advantages of the present disclosure that are not mentioned may be understood based on following descriptions, and may be more clearly understood based on embodiments of the present disclosure. Further, it will be easily understood that the purposes and advantages of the present disclosure may be realized using means shown in the claims and combinations thereof.

### [Technical Solution]

A dishwasher according the present disclosure includes a tub having a washing space defined therein, wherein dishes may be received in the washing space; a base disposed under the tub; and a heat pump apparatus for heating washing water to be introduced into the tub, wherein the heat pump apparatus includes: a compressor disposed in the base and configured to compress refrigerant; and a condenser configured to: receive the refrigerant from the compressor; heat the washing water to be supplied to the tub when a washing mode is performed; and heat air to be supplied to the tub when a drying mode is performed.

Furthermore, the condenser may include: a double tube constructed to provide dual flow paths, wherein the refrigerant having flowed through the compressor and the washing water to be supplied to the tub separately and respectively flow the dual flow paths; and a casing constructed to accommodate the double tube therein, wherein heat exchange between the air to be supplied to the tub and the refrigerant flowing through the double tube occurs inside the casing.

Furthermore, the casing may include: a casing body inside which air exchanging heat with the double tube flows; an inlet tube thorough which air to heat-exchange with the double tube may be introduced into the casing body; and an outlet tube through which air having heat-exchanged with the double tube may be discharged out of the casing body, wherein the inlet tube and the outlet tube may be arranged so as to be spaced apart from each other along a longitudinal direction of the casing body.

Furthermore, each of a cross-sectional area of the inlet tube and a cross-sectional area of the outlet tube may be smaller than a cross-sectional area of the casing body in a direction perpendicular to a flow direction of the air.

Furthermore, the casing body may include a first end wall and a second end wall arranged so as to be spaced apart from each other in the longitudinal direction and so as to face each other, wherein the inlet tube may be positioned closer to the second end wall among the first end wall and the second end wall, wherein the outlet tube may be positioned closer to the first end wall among the first end wall and the second end wall.

Furthermore, an air intake flow path and an air discharge flow path may be defined in the inlet tube and the outlet tube, respectively, wherein each of the air intake flow path and the air discharge flow path may extend so as to intersect an inner flow path along which the air flows inside the casing body.

Furthermore, the double tube may include a coil wound a plurality of times into a coil shape, wherein the coil may be accommodated inside the casing.

Furthermore, the casing may include a casing body inside which air exchanging heat with the double tube flows, wherein the coil may be wound along in a longitudinal direction of the casing body.

Furthermore, the casing may further include: an inlet tube thorough which air to heat-exchange with the double tube may be introduced into the casing body; and an outlet tube through which air having heat-exchanged with the double tube may be discharged out of the casing body, wherein in a longitudinal direction of the casing body, a length of the coil may be greater than a spacing between the inlet tube and the outlet tube.

Furthermore, the coil may be spaced from an inner surface of the casing.

Furthermore, the double tube may include: a washing water tube acting as an inner tube of the double tube and constituting a flow path of the washing water; and a refrigerant tube acting as an outer tube of the double tube and constituting a flow path of the refrigerant.

Furthermore, a direction in which the washing water flows inside the washing water tube and a direction in which the refrigerant flows inside the refrigerant tube may be the same as each other.

Furthermore, a direction in which the washing water flows inside the washing water tube and a direction in which the refrigerant flows inside the refrigerant tube may be different from each other.

Furthermore, before the washing water tube and the refrigerant tube is introduced into the casing, the washing water tube and the refrigerant tube may be combined with each other to form the double tube.

Furthermore, after the double tube extends out of the casing, the double tube may be separated into the washing water tube and the refrigerant tube as individual single tubes, respectively.

### [Advantageous Effects]

In the dishwasher according to the present disclosure, the condenser includes the double tube in which heat exchange between a refrigerant and washing water is performed and the double tube is wound into the coil form, thereby improving heat exchange performance and heat exchange efficiency of the condenser,

In addition, in the dishwasher according to the present disclosure, he double tube wound into the coil shape is accommodated in the duct-shaped casing and the casing is configured to function as a thermal insulation material, thereby improving heating efficiency of washing water while a washing mode is performed.

In addition, in the dishwasher according to the present disclosure, while the drying mode is performed in a state in which the double tube wound into the coil shape is accommodated in the duct-shaped casing, the double tube heats the air, so that switching of a flow path is unnecessary when an operation mode switches from the washing mode to the drying mode, and additional structures such as a switching valve may be excluded, thereby simplifying a structure of the dishwasher and reducing a manufacturing cost thereof.

In addition to the above-mentioned effects, the specific effects of the present disclosure as not mentioned will be described below along with the descriptions of the specific details for carrying out the present disclosure.

### [Description of Drawings]

FIG. 1 is a front perspective view of a dishwasher according to an embodiment of the present disclosure.
FIG. 2 is a schematic cross-sectional view of the dishwasher illustrated in FIG. 1.
FIG. 3 is a schematic view for illustrating a heat pump apparatus provided in the dishwasher of FIG. 2.
FIG. 4 is a schematic view of a dishwasher having a heat pump apparatus according to an embodiment of the present disclosure.
FIG. 5 is a schematic diagram for illustrating an operation of the heat pump apparatus when the dishwasher illustrated in FIG. 4 operates in a washing mode.
FIG. 6 is a schematic view for illustrating an operation of the heat pump apparatus when the dishwasher illustrated in FIG. 4 operates in a drying mode.
FIG. 7 is a perspective view illustrating a detailed configuration of a condenser illustrated in FIG. 4.
FIG. 8 is a cross-sectional view of FIG. 7.
FIG. 9 is a front view of the condenser illustrated in FIG. 7 and is a diagram for illustrating a state in which refrigerant and washing water flow in different directions along a double tube.
FIG. 10 is a front view of the condenser illustrated in FIG. 7, and is a diagram for illustrating a state in which refrigerant and washing water flow in the same direction along a double tube.

### [Best Mode]

The above-mentioned purposes, features, and advantages will be described in detail later with reference to the attached drawings, so that those skilled in the art in the technical field to which the present disclosure belongs may easily implement the technical ideas of the present disclosure. In describing the present disclosure, upon determination that a detailed description of the publicly known technology related to the present disclosure may unnecessarily obscure the gist of the present disclosure, the detailed description will be omitted. Hereinafter, a preferred embodiment according to the present disclosure will be described in detail with reference to the attached drawings. In the drawings, identical reference numerals are used to indicate identical or similar components.

Although first, second, and the like are used to describe various components, these components are not limited by such terms. Such terms are only used to distinguish one component from another component, and unless specifically stated to the contrary, a first component may also be a second component.

Throughout the present document, unless otherwise stated, each component may be singular or plural.

Hereinafter, a first component being disposed "on top of (or under)" a second component may mean that the first component may be disposed in contact with a top surface (or a bottom surface) of the second component, as well as a third component may be interposed between the second component and the first component disposed "on top of (or under)" the second component.

Furthermore, when a first component is described as being "connected" or "coupled" to a second component, the components may be directly connected or coupled to each other, but a third component may be "interposed" between the components or the components may be "connected" or "coupled" to each other via the third components.

As used herein, the singular constitutes "a" and "an" are intended to include the plural constitutes as well, unless the context clearly indicates otherwise. In this application, terms such as "composed of" or "include" should not be construed as necessarily including all of various components or operations described herein, but should be construed that some components or operations among those may not be included or additional components or operations may be further included.

As used herein, the singular constitutes "a" and "an" are intended to include the plural constitutes as well, unless the context clearly indicates otherwise. In this application, terms such as "composed of" or "include" should not be construed as necessarily including all of various components or operations described herein, but should be construed that some components or operations among those may not be included or additional components or operations may be further included.

Throughout the present document, "A and/or B" means A, B, or A and B, unless otherwise specified, and "C to D" means equal to or greater than C and equal to or smaller than D unless otherwise specified.

### Overall structure of dishwasher

Hereinafter, an overall structure of a dishwasher 1 according to an embodiment of the present disclosure will be described in detail with reference to the attached drawings.

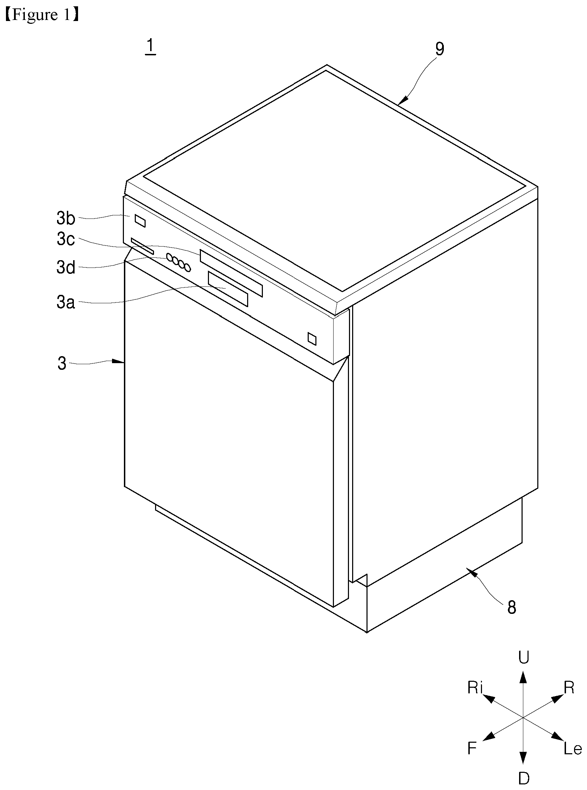

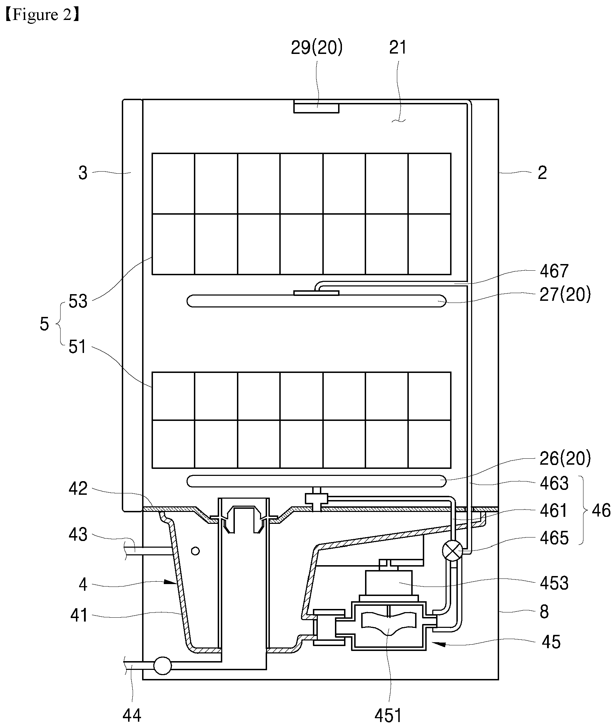

FIG. 1 is a front perspective view showing the dishwasher according to the present disclosure. FIG. 2 is a simplified cross-sectional view briefly showing an internal structure of the dishwasher according to the present disclosure.

As illustrated in FIG. 1 to FIG. 2, the dishwasher 1 according to an embodiment of the present disclosure may include a casing 9 that constitutes an exterior appearance, a tub 2 installed in an inner space of the casing 9 and having a washing space 21 defined therein where the washing target is washed, wherein a front surface of the tub is open, a door 3 that opens/closes the open front surface of the tub 2, a sump 4 disposed under the tub 2 for storing therein the washing water for washing the washing target, a dish rack 5 removably provided in the inner washing space 21 of the tub 2 to receive therein the washing target, and a water sprayer 20 installed adjacent to the dish rack 5 to spray the washing water for washing the washing target thereto.

In this regard, the washing target received in the dish rack 5 may be, for example, dishes such as bowls, plates, spoons, and chopsticks, and other cooking utensils. Hereinafter, unless otherwise specified, the washing target will be referred to as a dish.

The tub 2 may be formed in a box shape with an entirely open front surface, and have a configuration of a so-called washing tub.

The washing space 21 may be defined inside the tub 2. The open front surface of the tub 2 may be opened/closing by the door 3.

The tub 2 may be formed via pressing of a metal plate resistant to high temperature and moisture, for example, a stainless steel plate.

Moreover, on an inner surface of the tub 2, a plurality of brackets may be disposed for the purpose of supporting and installing functional components such as the dish rack 5 and the water sprayer 20 which will be described later thereon within the tub 2.

In one example, the sump 4 may include storage 41 that stores therein washing water, a sump cover 42 that distinguishes the storage 41 from the tub 2, a water supply 43 that supplies washing water from an external source to the storage 41, a water discharger 44 that discharges the washing water of the storage 41 to an outside, and a washing pump 45 and a supply flow path 46 that supply the washing water of the storage 41 to the water sprayer 20.

The sump cover 42 may be disposed at a top of the sump 4 and may serve to distinguish the tub 2 and the sump 4 from each other. Moreover, the sump cover 42 may have a plurality of collecting holes defined therein for collecting washing water sprayed into the washing space 21 through the water sprayer 20 into the sump 4.

That is, the washing water sprayed from the water sprayer 20 toward the dish may fall down to a bottom of the washing space 21, and may be collected again through the sump cover 42 and into the storage 41.

The washing pump 45 may be disposed at a side or a bottom of the sump 4 and may serve to pressurize the washing water and supply the pressurized washing water to the water sprayer 20.

One end of the washing pump 45 may be connected to the storage 41 and the other end thereof may be connected to the supply flow path 46. The washing pump 45 may be equipped with an impeller 451 and a motor 453. When power is supplied to the motor 453, the impeller 451 may rotate, and thus the washing water in the storage 41 may be pressurized, and then may be supplied to the water sprayer 20 through the supply flow path 46.

In one example, the supply flow path 46 may serve to selectively supply the washing water supplied from the washing pump 45 to the water sprayer 20.

For example, the supply flow path 46 may include a first supply flow path 461 connected to a lower spraying arm 26, and a second supply flow path 463 and 467 connected to an upper spraying arm 27 and a top nozzle 29. The supply flow path 46 may be provided with a supply flow path switching valve 465 that selectively opens/closes the supply flow paths 461, 463 and 467.

In this regard, the supply flow path switching valve 465 may be controlled so that the supply flow paths 461, 463 and 467 are opened sequentially or simultaneously.

In one example, the water sprayer 20 may be constructed to spray the washing water to the dishes stored in the dish rack 5.

More specifically, the water sprayer 20 may include the lower spraying arm 26 located under the tub 2 to spray the washing water to a lower rack 51, the upper spraying arm 27 located between the lower rack 51 and an upper rack 53 to spray the washing water to the lower rack 51 and the upper rack 53, and the top nozzle 29 located on top of the tub 2 to spray the washing water to a top rack or the upper rack 53.

In particular, the lower spraying arm 26 and the upper spraying arm 27 may be rotatably disposed in the washing space 21 of the tub 2 and may spray the washing water toward the washing target of the dish rack 5 while being rotating.

The lower spraying arm 26 may be rotatably supported on a top of the sump cover 42 so as to spray the washing water toward the lower rack 51 while being rotating and being disposed under the lower rack 51.

Moreover, the upper spraying arm 27 may be rotatably supported so as to spray the washing water on the dish while being rotating and being disposed between the lower rack 51 and the upper rack 53.

In one example, in order to increase washing efficiency, additional means for diverting the washing water sprayed from the lower spraying arm 26 into an upward direction (diverting in a U-direction) may be provided at a lower surface 25 of the tub 2.

In one example, the dish rack 5 for storing the washing target therein may be disposed in the washing space 21.

The dish rack 5 may be constructed to extend or retract from or into the inner space of the tub 2 through the open front surface of the tub 2.

For example, in FIG. 2, an embodiment is shown in which the dish rack 5 includes the lower rack 51 located at a lower portion of the tub 2 to accommodate therein relatively large dishes, the upper rack 5 located on top of the lower rack 51 to accommodate therein medium-sized dishes, and the top rack located at a top level of the tub 2 and capable of storing therein small dishes, etc. However, the present disclosure is not limited thereto. However, hereinafter, an example in which the dishwasher includes the three dish racks 5 as shown is described.

Each of the lower rack 51, the upper rack 53, and the top rack may be constructed to extend or retract from or into the inner space of the tub 2 through the open front surface of the tub 2.

For this purpose, guide rails (not shown) may be respectively disposed on both opposing walls constituting an inner surface of the tub 2. By way of example, the guide rails (not shown) may include an upper rail, a lower rail, and a top rail.

Wheels may be disposed on a bottom of each of the lower rack 51, the upper rack 53, and the top rack. The user may extend the lower rack 51, the upper rack 53, and the top rack from the inner space of the tub 2 through the open front surface of the tub 2 and may place the washing target thereon, or easily withdraw the washing target that have been washed out thereof.

The guide rail (not shown) may be embodied as a simple rail-type fixed guide rail to guide the extending or the retracting of the rack 5, or a telescopic guide rail capable of guiding the extending or the retracting of the rack 5 and at the same time, increasing an extension distance thereof as the rack 5 further extends from the inner space of the tub.

In one example, the door 3 is configured for opening/closing the open front surface of the tub 2 as described above.

A hinge (not shown) around which the door 3 is closed or opened may be provided at a bottom of the open front surface. Thus, the door 3 may pivot around the hinge as a pivot axis.

In this regard, a handle 3a for opening the door 3 and a control panel 3b for controlling the dishwasher 1 may be disposed on an outer side surface of the door 3.

As shown, the control panel 3b may include a display 3c that visually displays information regarding a current operating status of the dishwasher, etc., and a button unit 3d including a selection button through which a user's selection manipulation is input and a power button through which a user's manipulation for turning the dishwasher on and off is input.

In one example, a rear panel constituting an inner side surface of the door 3 may constitute one side surface of the tub 2 when the door 3 has been closed, and may constitute a seat surface on which the lower rack 51 of the dish rack 5 is supported when the door 3 is fully opened.

For this purpose, when the door 3 is fully opened downwardly, the rear panel of the door 3 may constitute a horizontal plane extending in the same direction as a direction in which the guide rail (not shown) guiding the displacement of the lower rack 51 extends.

In one example, the dishwasher 1 according to an embodiment of the present disclosure may further include a base 8.

The base 8 may be disposed under the tub 2 and may serve to support the tub 2.

Alternatively, the base 8 may provide a space in which the sump 4 is accommodated, and may provide an accommodation space in which various devices provided in the dishwasher 1 are accommodated.

Therefore, the base 8 may be manufactured to have an outer wall to support an entirety of the dishwasher, and to have an outer wall defining an accommodation space in which various devices are accommodated.

In one example, in the dishwasher according to an embodiment of the present disclosure, the washing water to be supplied to the tub 2 is heated and thus, the high-temperature washing water is sprayed to the washing target accommodated in the tub 2, thereby improving washing efficiency of the washing target and performance of the dishwasher 1.

To this end, the dishwasher according to an embodiment of the present disclosure may include a heat pump apparatus 10 for heating the washing water introduced into the tub 2. The heat pump apparatus 10 may heat the washing water so that the dishes are washed with high-temperature washing water, thereby improving the performance of the dishwasher.

The device for heating the washing water may be generally embodied as an electric heater that heats the washing water by converting electrical energy into thermal energy.

A coefficient of performance (COP) is a measure indicating the energy efficiency of each of the electric heater and the heat pump apparatus 10. As the coefficient of performance (COP) increases, the energy efficiency of the device increases.

The electric heater has a maximum COP of merely 1. However, when the washing water is heated using the heat pump apparatus 10 instead of the electric heater, the heat pump apparatus 10 may heat the washing water by transferring the heat from a low temperature thermal reservoir to a high temperature thermal reservoir.

Due to this structure, the COP of the heat pump apparatus 10 may exceed 1.

The COP of most of the heat pump apparatuses 10 actually used exceeds 1. Therefore, in the dishwasher that heats the washing water using the heat pump apparatus 10, energy efficiency may be improved compared to that when heating the washing water using the electric heater.

### Schematic Configuration of Heat Pump Apparatus

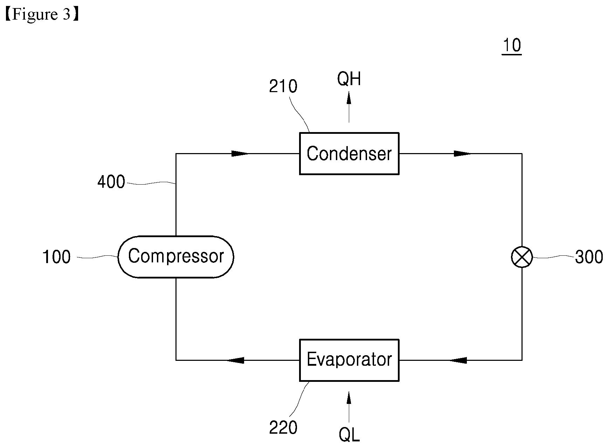

Hereinafter, the heat pump apparatus 10 provided in the dishwasher 1 according to an embodiment of the present disclosure will be described in more detail with reference to FIG. 3 and subsequent drawings.

FIG. 3 is a schematic diagram schematically showing the configuration of the heat pump apparatus 10.

In the drawings of FIG. 3 and subsequent drawings, a refrigerant flow path Fr is indicated by a solid line, a washing water flow path Fw is indicated by a dashed line, and an air flow path Fa is indicated by a dotted line.

Referring to FIG. 3, the heat pump apparatus 10 may include a compressor 100, a condenser 210, an expansion valve 300, and an evaporator 220.

The compressor 100, the condenser 210, the expansion valve 300, and the evaporator 220 are connected to each other via a refrigerant pipe 400, and the refrigerant pipe 400 provides the refrigerant flow path Fr through which the refrigerant may flow.

The refrigerant may function as a working fluid that absorbs heat or releases the heat while sequentially circulating through the compressor 100, the condenser 210, the expansion valve 300, and the evaporator 220 while a phase thereof is changing from liquid to gas, or from gas to liquid.

The compressor 100 may compress the refrigerant to discharge the refrigerant in a high-temperature and high-pressure state. The refrigerant discharged from the compressor 100 may be introduced into the condenser 210.

The refrigerant may radiate heat of QH while flowing through the condenser 210. The heat emitted from the condenser 210 may be used to heat the washing water or air introduced into the tub 2. Accordingly, respective flow paths through which the refrigerant, the washing water, and the air pass, respectively may be provided in the condenser 210. The refrigerant may dissipate the heat and thus may be phase-changed from gas to a liquid state while flowing through the condenser 210.

In this regard, the refrigerant having flowed through the condenser 210 may be a mixed gas of a liquid and a gas having a very small gas content, or may be a subcooled liquid.

The refrigerant discharged from the condenser 210 may be expanded while flowing through the expansion valve 300. As a result of the expansion of the refrigerant, the temperature of the refrigerant is lowered such that the refrigerator becomes a mixed gas in which gas and liquid are mixed with each other.

The refrigerant discharged from the expansion valve 300 absorbs heat QL from the air of the tub 2 and evaporates while flowing through the evaporator 220, and accordingly, the content of the gas in the refrigerant increases.

In a state in which the refrigerant has exited the evaporator 220, the refrigerant may be a mixed gas having a very small proportion of liquid or a superheated gas.

The refrigerant discharged from the evaporator 220 may be introduced into the compressor 100 again and compressed by the compressor to become a high-temperature and high-pressure gas.

In the above-described order, the refrigerant circulates through the heat pump apparatus 1. In this circulation process, the phase of the refrigerant changes, and accordingly, the refrigerant may absorb heat in the evaporator 220 and discharge heat in the condenser 210.

In order to allow active heat transfer in the evaporator 220, it is desirable to allow a large amount of air to flow toward the evaporator 220. To this end, the heat pump apparatus 10 may further include a blowing fan for blowing the air toward the evaporator 220.

In one example, the dishwasher 1 may operate in a washing mode in which the heated washing water is sprayed to the dishes as the washing target accommodated in the tub 2, and a drying mode in which the heated air is sprayed to the dishes accommodated in the tub 2 to remove moisture from a surface of the washing target after the washing mode is terminated.

In an embodiment as described below, a plurality of heat exchangers are provided. When the washing mode or the drying mode is performed, each heat exchanger may be used or not used, and may operate as the condenser 210 or the evaporator 220.

### Pipe Connection Structure of Heat Pump Apparatus and Tub

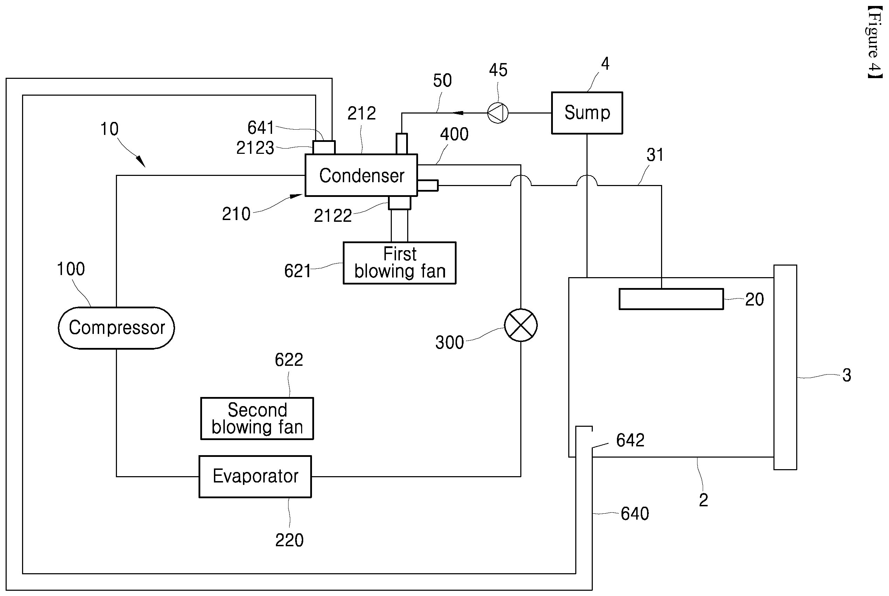

Hereinafter, a connection structure between the heat pump apparatus 10 and the tub 2 via a pipe and a duct according to an embodiment of the present disclosure will be described in detail with reference to FIGS. 4 to 6.

First, referring to FIG. 4, the heat pump apparatus 10 may include the compressor 100, the condenser 210, the expansion valve 300, and the evaporator 220.

The condenser 210 may operate as a heat exchanger in which the refrigerant is condensed while the heat is transferred from the refrigerant to the washing water to heat the washing water during the washing mode, and the heat is transferred from the refrigerant to the air during the drying mode.

That is, the condenser 210 of the heat pump apparatus 10 according to an embodiment of the present disclosure may be configured to act as a heating means during both the washing mode and the drying mode.

Therefore, when an operation mode of the dishwasher switches from the washing mode to the drying mode, a flow path switching means such as a four-way valve for switching the refrigerant flow path Fr which is required in the conventional dishwasher may be excluded from the dishwasher of the present disclosure.

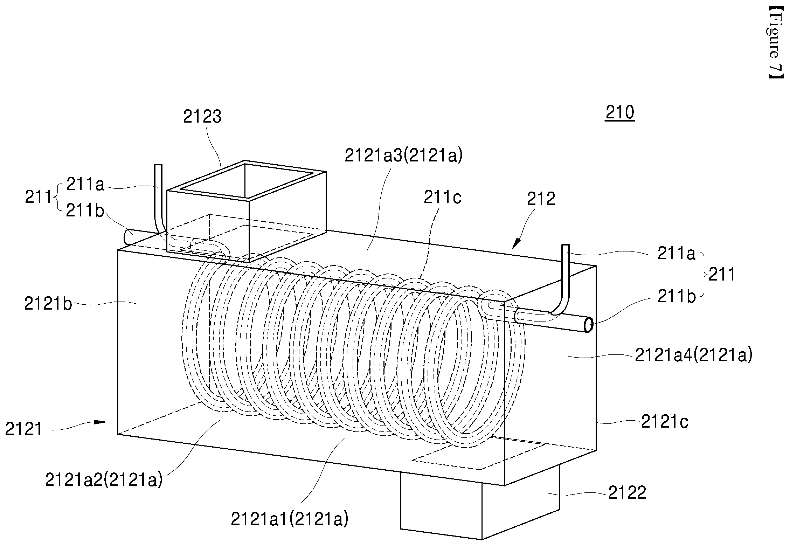

A detailed configuration of the condenser 210 having a heat exchange structure between the refrigerant and the washing water and a heat exchange structure between the refrigerant and the air will be described later with reference to FIG. 7.

The expansion valve 300 may receive the refrigerant from the condenser 210 and act to expand the refrigerant.

The refrigerant may be introduced into the evaporator 220 through the expansion valve 300. In an embodiment, the evaporator 220 may operate as a heat exchanger that evaporates the refrigerant by exchanging heat thereof with air both during the washing mode and during the drying mode.

In one example, as described above, the heat pump apparatus 10 may further include a refrigerant pipe 400 connecting the compressor 100, the condenser 210, the evaporator 220, and the expansion valve 300 to each other. In an embodiment, the refrigerant pipe 400 may be constructed such that the refrigerant flow path Fr is not switched when the operation mode switches from the washing mode to the drying mode.

In one example, the heat pump apparatus 10 may further include a first blowing fan 621 configured to generate an airflow of air flowing through the condenser 210 and a second blowing fan 622 disposed to face the evaporator 220 and configured to generate an airflow of air flowing through the evaporator 220.

The first blowing fan 621 and the second blowing fan 622 blow the air to allow the air to flow through the condenser 210 and the evaporator 220, respectively, so that a large amount of air flows through the condenser 210 and the evaporator 220, respectively.

The first blowing fan 621 may be disposed at a position close to the condenser 210, and may be configured to blow air into a casing 212 constituting the condenser 210 as described later.

As illustrated in FIG. 4, the airflow of the air generated through the first blowing fan 621 may be introduced into the condenser 210 through an inlet tube 2122 of the casing 212.

The airflow of the air introduced through the inlet tube 2122 may be heated by the refrigerant while flowing through the inside of the casing 212, and the heated air may be exhausted through an outlet tube 2123 of the condenser 210.

An inlet 641 of a supply duct 640 may be connected to the outlet tube 2123 of the condenser 210. Accordingly, the airflow of the air introduced into the inlet 641 of the supply duct 640 may flow along the inside of the supply duct 640 and may be exhausted to the tub 2 through an outlet 642.

As described above, the first blowing fan 621 operates only when the drying mode is in progress, and the operation thereof may be stopped when the washing mode is in progress.

In one example, the second blowing fan 622 may be disposed at a position facing the evaporator 220, and the air having flowed through the evaporator 220 may be discharged to the outside through the base 8.

The evaporator 220 needs to perform heat exchange between the refrigerant and the air both in the washing mode and the drying mode. Therefore, unlike the first blowing fan 621, the second blowing fan 622 may be configured to operate both during the cleaning mode and during the drying mode.

In one example, the dishwasher 1 may include the sump 4 disposed under the tub 2 and constructed to store the washing water therein, and the sprayer 20 disposed inside the tub 2, connected to the sump 4, and configured to spray the washing water toward the washing target.

The condenser 210 and the sump 4 may be connected to each other via a pipe providing the washing water flow path Fw through which the washing water circulates. To this end, the dishwasher 1 may include a first water supply flow path 31 and a washing pump 45. The first water supply flow path 31 may be provided in the above-described supply flow path 46.

The first water supply flow path 31 may connect the condenser 210 and the sprayer 20 to each other, and washing water may flow in the first water supply flow path 31. The washing pump 45 may be disposed in the circulation flow path 50 connecting the sump 4 and the condenser 210 to each other, or may be disposed in the first water supply flow path 31. An embodiment in which the washing pump 45 is disposed in the circulation channel 50 is described below with reference to FIG. 4 by way of example. However, the present disclosure is not limited thereto. However, the present disclosure will be described based on the illustrated embodiment.

The circulation flow path 50 may be connected to the condenser 210. In this regard, while the washing water is flowing through the condenser 210 through the circulation flow path 50, the washing water may be heated by absorbing the heat from the refrigerant flowing through the condenser 210. The refrigerant may be condensed while the heat therefrom is taken away by the washing water in the condenser 210 operating as the heat exchanger.

The heated washing water discharged from the condenser 210 may be introduced into the sprayer 20 through the first water supply flow path 31 and then sprayed to the tub 2 through the sprayer 20.

The washing water may drop downwardly from the tub 2 and re-flow into the sump 4. The sump 4 may be disposed under the tub 2. Therefore, the washing water may drop downwardly of the tub 2 under the gravity and be introduced into the sump 4.

In one example, the heat pump apparatus 10 of the dishwasher 1 according to an embodiment of the present disclosure may further include an air flow channel that provides an air flow path Fa for air to be supplied to the tub 2 when the drying mode is in progress.

First, as illustrated in FIG. 4, the air flow channel may include the supply duct 640 for guiding air having flowed through the condenser 210 toward the tub 2.

The supply duct 640 may have an inlet 641 formed at one end thereof and an outlet 642 formed at the other end thereof. the air flow path Fa may be formed between the inlet 641 and the outlet 642.

The inlet 641 of the supply duct 640 may always communicate with the outlet tube 2123 of the condenser 210. Accordingly, the airflow of the air heated while flowing through the condenser 210 may be introduced into the supply duct 640 through the inlet 641.

The outlet 642 of the supply duct 640 may communicate with the tub 2. In one example, the outlet 642 may be formed in a lower surface of the tub 2 so that the air may be effectively sprayed onto the washing target and drying efficiency for drying the washing target may be secured.

In one example, an inner space of the casing 212 of the condenser 210 is in communication with each of the inlet tube 2122 and the outlet tube 2123. In addition, the inlet tube 2122 of the casing 212 communicates with the first blowing fan 621, and the outlet tube 2123 of the casing communicates with the inlet 641 of the supply duct 640.

Accordingly, the inlet tube 2122, the inner space, and the outlet tube 2123 of the casing 212 may constitute a continuous air duct through which the air flows, and may constitute a portion of the air flow channel.

A detailed configuration of the casing 212 of the condenser 210 will be described later with reference to FIG. 7.

### Refrigerant and Air Flow Paths in Washing Mode

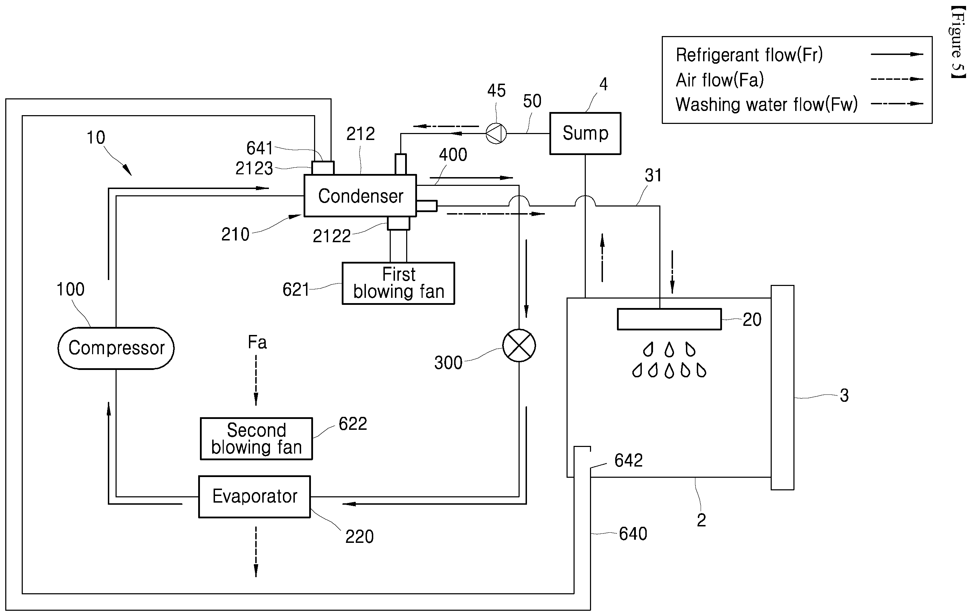

Hereinafter, the operation of the heat pump apparatus 10 when washing water is heated in the washing mode according to an embodiment of the present disclosure will be described with reference to FIG. 5.

When the dishwasher 1 operates in the washing mode, the refrigerant flow path Fr along which the refrigerant flowing out from the compressor 100 is introduced into the condenser 210, and the refrigerant flowing out from the evaporator 220 is introduced into the compressor 100 may be formed.

In this regard, the refrigerant flowing into the condenser 210 is in a high-temperature/high-pressure state. Thus, the heat therefrom may be taken away by the washing water flowing through the condenser 210 and thus the refrigerant may be condensed. Accordingly, the condenser 210 may operate as a heat exchanger that heats the washing water.

In this regard, the washing pump 45 may operate to supply the heated washing water to the sump 4 and to transfer the washing water from the sump 4 back to the condenser 210.

In one example, the refrigerant discharged from the condenser 210 may be expanded while flowing through the expansion valve 300, and thus the temperature thereof may be lowered.

The refrigerant discharged from the expansion valve 300 may flow through the evaporator 220 and be introduced into the compressor 100. In this regard, the refrigerant introduced into the evaporator 220 absorbs heat from the air and evaporates while flowing through the evaporator 220. Thus, the evaporator 220 acts as a heat exchanger.

The second blowing fan 622 may operate to generate an airflow of air flowing through the evaporator 220.

Meanwhile, when the washing mode is performed, the operation of the first blowing fan 621 is stopped. Therefore, an airflow of air through the air flow path Fa inside the supply duct 640 is not generated.

### Refrigerant and Air Flow Paths in Drying Mode

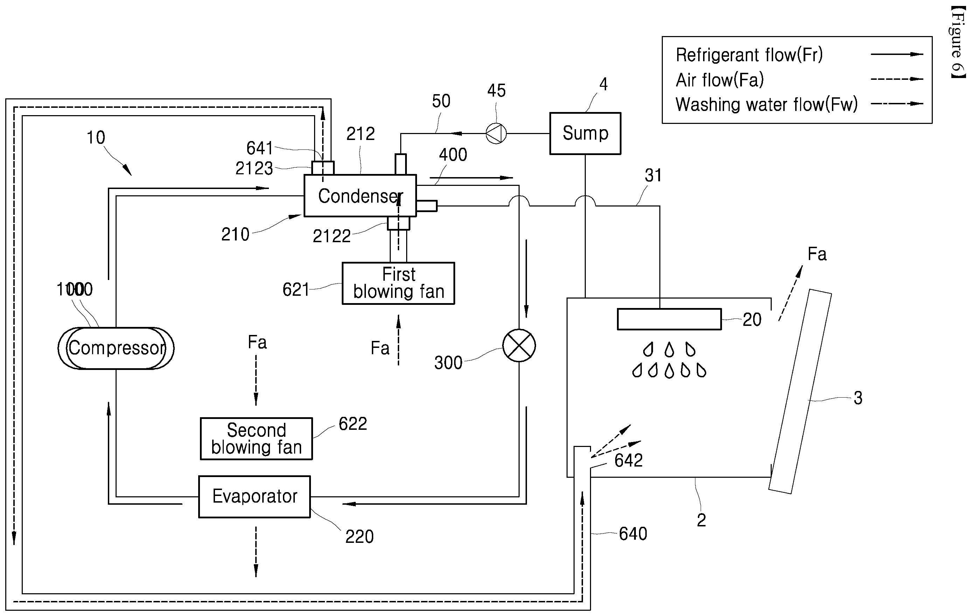

Next, the operation of the heat pump apparatus 10 when the dishwasher 1 heats air during the drying mode according to an embodiment of the present disclosure will be described with reference to FIG. 6.

After the washing mode is terminated, the dishwasher 1 may execute the drying mode in which the object to be washed, that is, the washing target accommodated in the tub 2 is dried using the heated air.

The flow of the washing water in the heat pump apparatus 10 may be stopped during the drying mode. Accordingly, in the drying mode, the washing water is not injected into the tub 2, but instead, the heated air may be injected into the tub 2 via the air flow channel.

When the dishwasher 1 operates in the drying mode, the refrigerant flow path Fr along which the refrigerant flowing out of the compressor 100 is introduced into the condenser 210, and the refrigerant flowing out of the evaporator 220 is introduced into the compressor 100 may be formed in a similar manner to the above-described washing mode. Since the refrigerant flow path Fr formed in the drying mode is the same as the refrigerant flow path Fr formed when the above-described washing mode is performed, the description thereof will be omitted.

The high-temperature refrigerant flowing through the condenser 210 may be condensed while the heat therefrom is taken away by the air supplied into the casing 212 of the condenser 210. In order to generate an airflow of air to be supplied into the casing 212 of the condenser 210, the operation of the first blowing fan 621 may be started.

Accordingly, when the first blowing fan 621 operates, the air discharged from the outlet tube 2123 of the casing 212 of the condenser 210 is introduced into the inlet 641 of the supply duct 640, and then is supplied to the tub 2 through the outlet 642.

As shown in the drawing, the air supplied to the tub 2 may dry the washing target and then may be discharged to the outside through a partially opened door 3.

Meanwhile, the second blowing fan 622 may operate even during the drying mode.

When the second blowing fan 622 operates to generate an airflow of air, heat exchange may be performed between the air of the base 8 and the evaporator 220.

In this case, water vapor included in the airflow may be at least partially condensed while flowing through the evaporator 220.

Although not shown, the base 8 may further include a means for collecting the condensed water condensed by the evaporator 220.

### Detailed Structure of Condenser

Hereinafter, a detailed structure of the condenser 210 provided in the heat pump apparatus 10 according to an embodiment of the present disclosure will be described with reference to FIGS. 7 to 10.

As described above, an purpose of the present disclosure is to provide the condenser 210 that may function as a heat exchanger for heating washing water during the washing mode and may function as a heat exchanger for heating air during the drying mode.

First, the condenser 210 may include a double tube 211 that provides dual flow paths through which the refrigerant flowing through the compressor 100 and the washing water to be supplied to the tub 2 flow separately in order to function as a heat exchanger between the washing water and the refrigerant.

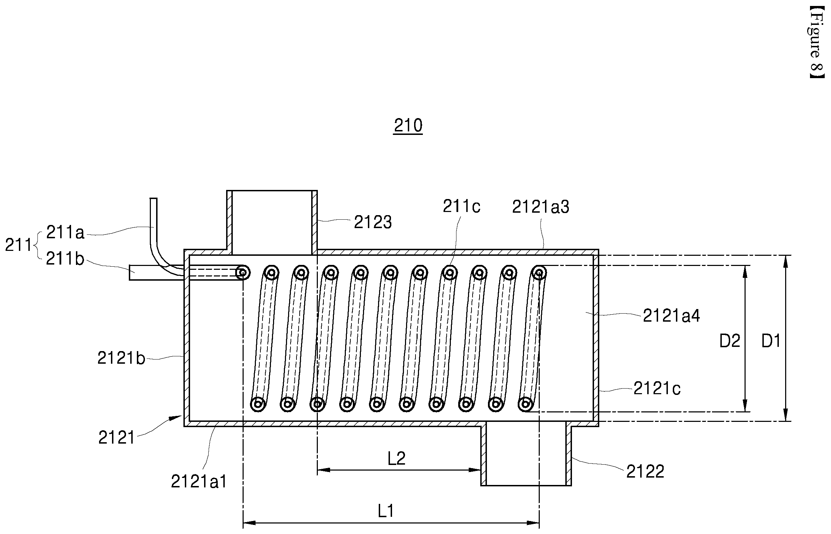

In an example, as illustrated in FIGS. 7 and 8, the double tube 211 may include a washing water tube 211a which becomes an inner tube and constitutes the flow path Fw of washing water, and a refrigerant tube 211b which becomes an outer tube and constitutes the flow path Fr of refrigerant.

Accordingly, the washing water flows along an inner channel of the washing water tube 211a, and the refrigerant may flow along an inner channel formed between the washing water tube 211a and the refrigerant tube 211b.

As described above, the inner tube acts as the washing water tube 211a and the outer tube acts as the refrigerant tube 211b. Thus, the heat of the refrigerant may be effectively transferred to the washing water through the washing water tube 211a during the washing mode. As will be described later, the heat of the refrigerant may be effectively transferred to the air flowing outside the refrigerant tube 211b through the refrigerant tube 211b during the drying mode.

However, the direction in which the washing water flows through the washing water tube 211a of the double tube 211 and the direction in which the refrigerant flows through the refrigerant tube 211b may be set to be the same as or different from each other.

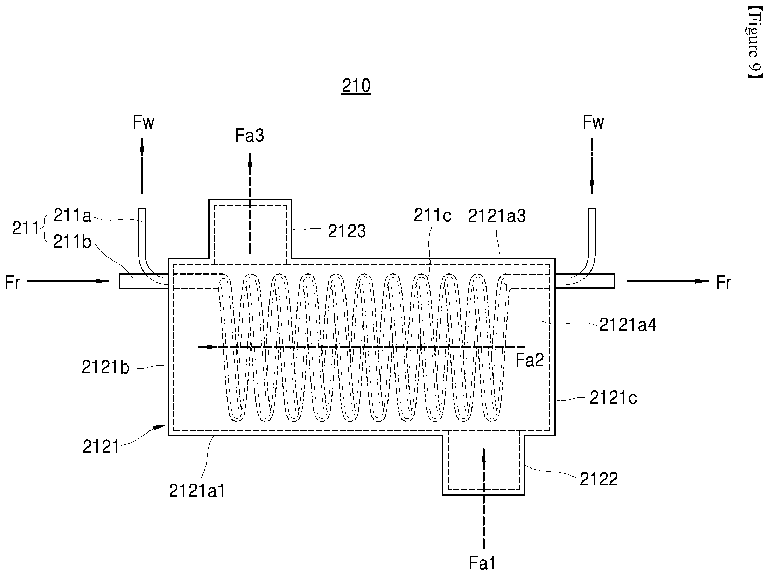

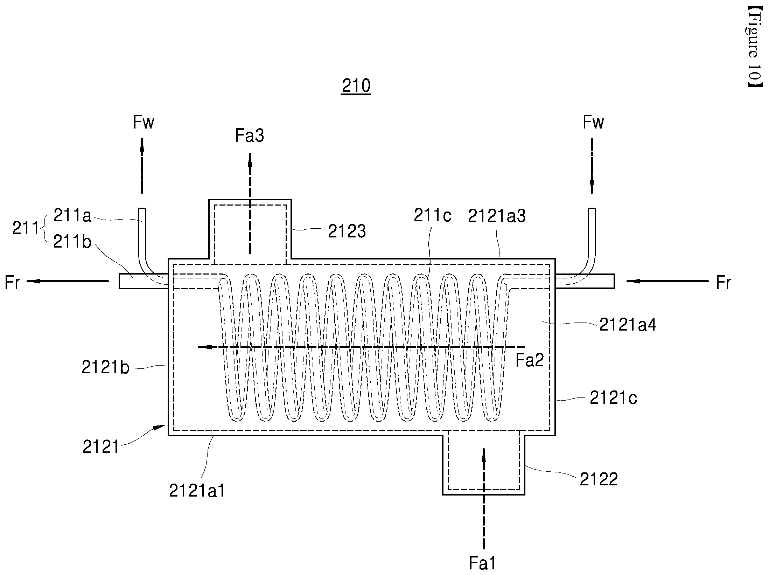

FIG. 9 illustrates an embodiment in which flow directions of the water and the refrigerant, that is, the flow directions in the refrigerant flow path Fr and the washing water flow path Fw are opposite to each other. FIG. 10 illustrates an embodiment in which flow directions of the water and the refrigerant, that is, the flow directions in the refrigerant flow path Fr and the washing water flow path Fw are the same as each other
The flow direction in each of the refrigerant flow path Fr and the washing water flow path Fw may be selected in consideration of various design variables such as a heating load of the washing water and a flow amount of the refrigerant.

In one example, as illustrated, the double tube 211 of the condenser 210 according to an embodiment of the present disclosure may include a coil 211c wound a plurality of times into the form of a coil.

As described above, the coil 211c is formed by winding the double tube 211 in which the heat exchange between the refrigerant and the washing water is performed in the form of the coil, such that a total length of the condenser 210 is prevented from being increased, while the heat exchange area between the refrigerant and the washing water may be sufficiently and significantly secured, compared to the conventional structure in which the heat exchange is performed through a simple straight shaped double tube 211.

FIG. 7 and FIG. 8 illustrate an example of the coil 211c formed by winding the double tube 211 1 multiple times. The number of windings of the coil 211c may be adjusted based on a heating load of washing water or a heating load of air. The present disclosure is not limited thereto. However, the present disclosure will be described below based on the coil 211c having the number of windings according to the illustrated embodiment.

In one example, the condenser 210 according to an embodiment of the present disclosure may further include the casing 212 which accommodates the double tube 211 therein and in which heat exchange is performed between air to be supplied to the tub 2 and the refrigerant flowing through the double tube 211.

More specifically, the casing 212 may include a casing body 2121 in which air that exchanges heat with the refrigerant of the double tube 211 flows, the inlet tube 2122 into which the air to heat-exchange with the refrigerant of the double tube 211 is introduced, and the outlet tube 2123 through which air that has exchanged the heat with the refrigerant of the double tube is discharged.

The casing body 2121 may be provided in a form of a duct or a hollow box to accommodate an entirety of the coil 211c in an inner space defined therein and to allow the air to flow in the inner space defined therein.

Accordingly, as described above, the casing body 2121 together with the supply duct 640 constitutes a portion of the air flow channel.

In addition, since the coil 211c is entirely accommodated in the inner space of the casing body 2121, the casing body 2121 may act as a thermal insulating means for thermally insulating the coil 211c. That is, the heat exchange of the refrigerant with the external air may be minimized due to the thermal insulation effect of the casing body 2121 while the washing water is heated during the washing mode. Thus, heat exchange efficiency for heating the washing water may be improved, and a heating time duration of the washing water may be significantly reduced.

To this end, the casing body 2121 may be made of a plastic material that it is easy to fabricate and process and which has a relatively low heat transfer rate.

In one example, the casing body 2121 may be formed in c cylindrical hollow shape or a rectangular hollow pillar shape in which an extending direction of the coil 211c is a longitudinal direction thereof such that the coil 211a is entirely in the inner space thereof. In other words, the coil 211c may be wound into the coil shape while extending along the longitudinal direction of the casing body 2121.

In FIG. 7 and subsequent drawings, the casing body 2121 having the rectangular hollow pillar shape in which an outer peripheral wall 2121a includes four wall portions is illustrated by way of example. When the casing body 2121 is provided in the cylindrical hollow shape, the outer peripheral wall 2121a may be formed as a cylindrical surface.

Based on the illustrated embodiment, a first wall portion 2121a1 of the outer peripheral wall 2121a may constitute a lower surface, and a second wall portion 2121a2 of the outer peripheral wall 2121a may constitute a front surface.

In addition, a third wall portion 2121a3 of the outer peripheral wall 2121a may constitute an upper surface, and a fourth wall portion 2121a4 may constitute a rear surface.

In this regard, the coil 211c may be disposed in the inner space of the casing body 2121 while being surrounded with the first to fourth wall portions 2121a1, 2121a2, 2121a3, and 2121a4.

In this regard, the coil 211c may be spaced from each of the first to fourth wall portions 2121a1, 2121a2, 2121a3, and 2121a4 by a predetermined spacing.

That is, as illustrated in FIG. 8, an outer diameter D2 of a winding of the coil 211c may be smaller than a spacing D1 between the first wall portion 2121a1 and the third wall portion 2121a3 or a spacing between the second wall portion 2121a2 and the fourth wall portion 2121a4.

As described above, the coil 211c is positioned so as to be prevented from direct contact with each of the first to fourth wall portions 2121a1, 2121a2, 2121a3, and 2121a4, thereby preventing a heat conduction between the coil 211c and each of the first to fourth wall portions 2121a1, 2121a2, 2121a3, and 2121a4.

In one example, a first end wall 2121b and a second end wall 2121c may be disposed at both opposing end portions of each of the first to fourth wall portions 2121a1, 2121a2, 2121a3, and 2121a4, respectively.

As illustrated, the first end wall 2121b and the second end wall 2121c may be disposed to be spaced apart from each other in the longitudinal direction of the casing body 2121 and may be formed to face each other
The double tube 211 may pass through the first end wall 2121b and extend into the inner space of the casing, and may pass through the second end wall 2121c and extends out of the casing.

In this regard, the washing water tube 211a and the refrigerant tube 211b may be combined with each other before passing through the first end wall 2121b and then the combination thereof may be introduced into the casing body 2121 to form the double tube 211.

The double tube 211 as the combination of the washing water tube 211a and the refrigerant tube 211b as described above may be wound into the coil shape inside the casing body 2121 to form the coil 211c.

In addition, after passing through the second end wall 2121c, the double tube 211 is separated into the washing water tube 211a and the refrigerant tube 211b so as to be converted into single tubes, respectively, which extend out of the casing body 2121 in the separate manner.

In one example, the casing 212 of the condenser 210 may further include the inlet tube 2122 through which the airflow of the air generated by the first blowing fan 621 is introduced, and the outlet tube 2123 through which the air heated via the heat exchange with the coil 211c is discharged.

As described above, the inlet tube 2122 and the outlet tube 2123 of the casing 212 together with the casing body 2121 may constitute the continuous air duct through which the air may flow, and thus may constitute a portion of the air flow channel.

As illustrated, in a similar manner to the casing body 2121, each of the inlet tube 2122 and the outlet tube 2123 may be provided as a rectangular hollow pillar shaped duct having a rectangular cross section in a direction perpendicular to the flow direction of the air.

In this regard, a cross-sectional area size of each of the inlet tube 2122 and the outlet tube 2123 may be smaller than a cross-sectional area size of the casing body 2121 in the direction perpendicular to the flow direction of the air.

In addition, the inlet tube 2122 and the outlet tube 2123 may be spaced apart from each other by a spacing as great as possible.

As illustrated, for example, the inlet tube 2122 and the outlet tube 2123 may be spaced apart from each other along the longitudinal direction of the casing body 2121.

More specifically, the inlet tube 2122 may be positioned closer to the second end wall 2121c among the first end wall 2121b and the second end wall 2121c.

In this regard, the inlet tube 2122 may be connected to the first wall portion 2121a1 of the casing body 2121 so as to protrude in a direction away from the first wall portion 2121a1.

In addition, the outlet tube 2123 may be positioned closer to the first end wall 2121b among the first end wall 2121b and the second end wall.

In this regard, the outlet tube 2123 may protrude from the third wall portion 2121a3 of the casing body 2121 in a direction away from the third wall portion 2121a3.

As described above, the shapes and positions of the inlet tube 2122 and the outlet tube 2123 may be set, such that referring to FIGS. 9 and 10, each of an air intake flow path Fa1 of the inlet tube 2122 and an air discharge flow path Fa3 of the outlet tube 2123 has directionality intersecting the flow direction in an inner flow path Fa2 of the casing body 2121.

Thus, a longer residence time of the air introduced through the inlet tube 2122 in the inner space of the casing body 2121 may be secured, such that the air may be heated to a target temperature and then be discharged through the outlet tube 2123.

In addition, for the same reason, as illustrated in FIG. 8, a distance L2 between the inlet tube 2122 and the outlet tube 2123 may be smaller than a length L1 of the coil 211c in the longitudinal direction of the casing body 2121.

That is, the length L1 of the coil 211c may be greater than the spacing L2 between the inlet tube 2122 and the outlet tube 2123.

Although the embodiments of the present disclosure have been described in more detail with reference to the accompanying drawings, the present disclosure is not necessarily limited to these embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of the present disclosure is not limited by these embodiments. Therefore, it should be understood that the embodiments described above are not restrictive but illustrative in all respects. In addition, even though an effect of a configuration of the present disclosure is not explicitly described in describing the embodiment of the present disclosure above, it is obvious that the predictable effect from the configuration should be recognized.

## Claims

1. A dishwasher comprising:
a tub having a washing space defined therein, wherein dishes are received in the washing space;
a base disposed under the tub; and
a heat pump apparatus for heating washing water to be introduced into the tub,
wherein the heat pump apparatus includes:
a compressor disposed in the base and configured to compress refrigerant; and
a condenser configured to:
receive the refrigerant from the compressor;
heat the washing water to be supplied to the tub when a washing mode is performed; and
heat air to be supplied to the tub when a drying mode is performed.

2. The dishwasher of claim 1, wherein the condenser includes:
a double tube constructed to provide dual flow paths, wherein the refrigerant having flowed through the compressor and the washing water to be supplied to the tub separately and respectively flow the dual flow paths; and
a casing constructed to accommodate the double tube therein, wherein heat exchange between the air to be supplied to the tub and the refrigerant flowing through the double tube occurs inside the casing.

3. The dishwasher of claim 2, wherein the casing includes:
a casing body inside which air exchanging heat with the double tube flows;
an inlet tube thorough which air to heat-exchange with the double tube is introduced into the casing body; and
an outlet tube through which air having heat-exchanged with the double tube is discharged out of the casing body,
wherein the inlet tube and the outlet tube are arranged so as to be spaced apart from each other along a longitudinal direction of the casing body.

4. The dishwasher of claim 3, wherein each of a cross-sectional area of the inlet tube and a cross-sectional area of the outlet tube is smaller than a cross-sectional area of the casing body in a direction perpendicular to a flow direction of the air.

5. The dishwasher of claim 3, wherein the casing body includes a first end wall and a second end wall arranged so as to be spaced apart from each other in the longitudinal direction and so as to face each other,
wherein the inlet tube is positioned closer to the second end wall among the first end wall and the second end wall,
wherein the outlet tube is positioned closer to the first end wall among the first end wall and the second end wall.

6. The dishwasher of claim 3, wherein an air intake flow path and an air discharge flow path are defined in the inlet tube and the outlet tube, respectively, wherein each of the air intake flow path and the air discharge flow path extends so as to intersect an inner flow path along which the air flows inside the casing body.

7. The dishwasher of claim 2, wherein the double tube includes a coil wound a plurality of times into a coil shape,
wherein the coil is accommodated inside the casing.

8. The dishwasher of claim 7, wherein the casing includes a casing body inside which air exchanging heat with the double tube flows,
wherein the coil is wound along in a longitudinal direction of the casing body.

9. The dishwasher of claim 8, wherein the casing further includes:
an inlet tube thorough which air to heat-exchange with the double tube is introduced into the casing body; and
an outlet tube through which air having heat-exchanged with the double tube is discharged out of the casing body,
wherein in a longitudinal direction of the casing body, a length of the coil is greater than a spacing between the inlet tube and the outlet tube.

10. The dishwasher of claim 7, wherein the coil is spaced from an inner surface of the casing.

11. The dishwasher of claim 2, wherein the double tube includes:
a washing water tube acting as an inner tube of the double tube and constituting a flow path of the washing water; and
a refrigerant tube acting as an outer tube of the double tube and constituting a flow path of the refrigerant.

12. The dishwasher of claim 11, wherein a direction in which the washing water flows inside the washing water tube and a direction in which the refrigerant flows inside the refrigerant tube are the same as each other.

13. The dishwasher of claim 11, wherein a direction in which the washing water flows inside the washing water tube and a direction in which the refrigerant flows inside the refrigerant tube are different from each other.

14. The dishwasher of claim 11, wherein before the washing water tube and the refrigerant tube is introduced into the casing, the washing water tube and the refrigerant tube are combined with each other to form the double tube.

15. The dishwasher of claim 11, wherein after the double tube extends out of the casing, the double tube is separated into the washing water tube and the refrigerant tube as individual single tubes, respectively.
